# EUROPÄISCHE PATENTSCHRIFT

(11) **EP 2 986 579 B1**
(45) Veröffentlichungstag und Bekanntmachung des Hinweises auf die Patenterteilung: **29.03.2017**
(21) Anmeldenummer: 14723880.2
(22) Anmeldetag: 08.04.2014
(51) Int. Cl.: C04B 7/43

(54) **VERFAHREN UND VORRICHTUNG ZUR ZEMENTKLINKERHERSTELLUNG**
PROCESS AND DEVICE FOR CEMENT CLINKER PRODUCTION
PROCÉDÉ ET DISPOSITIF DE FABRICATION DE CLINKER

(30) Priorität: 15.04.2013 AT 3072013
(43) Veröffentlichungstag der Anmeldung: 24.02.2016
(73) Patentinhaber: Holcim Technology Ltd., 8645 Rapperswil-Jona (CH)
(72) Erfinder: GASSER, Urs, CH-5235 Rüfenach (CH)
(74) Vertreter: Keschmann, Marc
(86) Internationale Anmeldenummer: PCT/IB2014/000500
(87) Internationale Veröffentlichungsnummer: WO 2014/170729

(56) Entgegenhaltungen:
- US-A- 4 392 822

## Beschreibung

Die Erfindung betrifft ein Verfahren zur Zementklinkerherstellung, bei welchem Rohmehl mit den heißen Abgasen eines Klinkerofens in einem Vorwärmer vorgewärmt und das vorgewärmte und ggf. in einem Kalzinator kalzinierte Rohmehl im Klinkerofen zu Klinker gebrannt wird, wobei der Vorwärmer wenigstens einen Strang aus einer Mehrzahl von hintereinander von dem Ofenabgas durchströmten Zyklon-Schwebegaswärmetauschern umfasst, in denen das Rohmehl stufenweise vorgewärmt wird.

Weiters betrifft die Erfindung eine Zementklinkerherstellungsanlage, umfassend einen Klinkerofen, an dessen ausgabeseitigem Ende ein Klinkerkühler angeschlossen ist und an dessen aufgabeseitigem Ende ein Vorwärmer und ggf. ein Kalzinator angeschlossen sind, wobei der Vorwärmer wenigstens einen Strang aus einer Mehrzahl von hintereinander von dem Ofenabgas entlang eines Strömungsweges durchströmbaren Zyklon-Schwebegaswärmetauschern umfasst, in denen das Rohmehl stufenweise vorgewärmt wird.

Bei der Herstellung von Zementklinker wird Rohmehl vorgewärmt, restgetrocknet, kalziniert, zu Klinker gebrannt und dann gekühlt. Nach diesem Trockenverfahren arbeitende Anlagen umfassen einen Vorwärmer aus Zyklon-Schwebegaswärmetauschern, einen Kalzinator, eine Tertiärluftleitung, einen Drehofen und einen Klinkerkühler. Die Energiezuführung für die Stoffumwandlung in dieser Anlage erfolgt durch Brennstoffzuführung in den Drehofen und in den Kalzinator. Die im Klinkerkühler erhitzte Luft wird zum Teil als so genannte Sekundärluft dem Drehofen und zum Teil als so genannte Tertiärluft dem Kalzinator zugeführt. Die Abgase des Drehofens werden durch eine Ofeneinlaufkammer und eine darüber befindliche Strömungseinschnürung zum Kalzinator geführt, durchströmen diesen und werden zusammen mit den im Kalzinator erzeugten Abgasen, bestehend aus Rauchgas des Kalzinator-Brennstoffes und CO2, in den Vorwärmer abgeführt.

Der Vorwärmer besteht aus einem oder mehreren Strängen und jeder Strang aus mehreren Wärmetauscherstufen, die jeweils von einem Zyklon-Schwebegaswärmetauscher gebildet sind. Das trockene Zementrohmehl wird dem Steigrohr der obersten Wärmetauscherstufe aufgegeben, durchwandert von oben nach unten die Wärmetauscherstufen und wird aus der zweituntersten Wärmetauscherstufe in den Kalzinator geleitet. Im Kalzinator wird das heiße Rohmehl nahezu völlig entsäuert und strömt mit dem KalzinatorAbgas in die unterste Wärmetauscherstufe, wird dort abgeschieden, der Ofeneinlaufkammer aufgegeben und gelangt durch diese als Heißmehl in den Drehofen. Das Heißmehl wird im Drehofen durch den Sinterungsprozess zu Klinker gebrannt.

Die im Kalzinatorabgas von ca. 1,4 normal m³/kg Klinker von 850 bis 890°C enthaltene thermische. Energie wird im Gleichstromwärmeaustausch stufenweise an das frische Rohmehl abgegeben. Dabei wird mit zunehmender Anzahl der Wärmetauscherstufen die Abgastemperatur tiefer, die thermische Effizienz der Ofenanlage besser und der Wärmetauscherturm größer und teurer. Typischerweise werden 4 bis 6 solcher Stufen gebaut, wobei die Anzahl der Stufen in erster Linie von der Rohmaterialfeuchte abhängig ist.

Die im Abgas von Klinkerofen und Kalzinator enthaltene nutzbare Wärme übersteigt das Aufnahmevermögen des Rohmehls aufgrund des üblichen Mengenverhältnisses und der Charakteristik des mehrstufigen Wärmeaustausches. Deshalb stellt die am Ofengasaustritt des Vorwärmers vorhandene thermische Energie von ca. 1,5 normal m³/kg Klinker von 290 bis >350°C noch ein nutzbares Restwärmepotential dar. Dieses kann zur Rohmaterial- und Brennstofftrocknung sowie anderweitig, zB Verstromung, außerhalb des thermischen Prozesses weiter genutzt werden.

Das Ofenabgas wird mittels eines Saugzuggebläses durch die Wärmetauscherstufen gezogen. Da dabei die gesamte Ofenabgasmenge durch alle Wärmetauscherstufen gezogen wird, sind die strömungstechnischen Querschnitte der Wärmetauscherstufen zwecks Minimierung des Druckabfalls und somit des elektrischen Energiebedarfs des Saugzuggebläses so groß wie möglich zu dimensionieren. Dem stehen allerdings die von der Größe direkt abhängigen Anlagekosten gegenüber.

Die vorliegende Erfindung zielt daher darauf ab, ein Verfahren und eine Zementklinkerherstellungsanlage der eingangs genannten Art dahingehend weiterzubilden, dass die Anlagenkosten reduziert werden können ohne Einbußen bei der thermischen Effizienz der Ofenanlage in Kauf nehmen zu müssen.

Zur Lösung dieser Aufgabe sieht die Erfindung bei einem Verfahren der eingangs genannten Art vor, dass ein Teilstrom des Ofenabgases abgezweigt wird, sodass lediglich ein verbleibender Reststrom des Ofenabgases zum Vorwärmen des Rohmehls genutzt wird. Im Vergleich zu herkömmlichen Systemen kann damit die gleiche Menge Rohmehl mit weniger Ofenabgas oder bei gleicher Ofenabgasmenge eine größere Menge Rohmehl vorgewärmt werden. Dies bewirkt, dass dem für das Vorwärmen verwendeten, verbleibenden Reststrom des Ofenabgases relativ mehr Wärme entzogen wird und die Ofenabgastemperatur nach der letzten Wärmetauscherstufe, d.h. beim Verlassen des Vorwärmers entsprechend geringer ist. Somit ist auch das Temperaturgefälle über jede Wärmetauscherstufe größer. Auf Grund der geringeren Ofenabgasmenge, die durch alle Wärmetauscherstufen gezogen wird, können unter Umständen die gasführenden Querschnitte der Wärmetauscherstufen und damit die Baukosten im Vergleich zur Auslegung für die gesamte Gasmenge vermindert werden. Der nicht zur Vorwärmung verwendete, abgezweigte Teilstrom des Ofenabgases steht für eine thermische Nutzung bei einer Temperatur von 850 bis 890°C zur Verfügung, und zwar insbesondere dann, wenn, wie dies einer bevorzugten Verfahrensweise entspricht, der Teilstrom des Ofenabgases nach dem in Strömungsrichtung des Ofenabgases gesehen ersten, d.h. untersten, Zyklon-Schwebegaswärmetauscher abgezweigt wird. Insbesondere wird der Teilstrom des Ofenabgases hierbei zwischen dem in Strömungsrichtung des Ofenabgases gesehen ersten und zweiten Zyklon-Schwebegaswärmetauscher abgezweigt.

Die Größe des abgezweigten Teilstroms kann den jeweiligen Verhältnissen entsprechend gewählt werden, wobei nach oben hin gewissen Grenzen gesetzt sind, um die Erhaltung der thermischen Gesamteffizienz sicherzustellen. Bevorzugt ist daher vorgesehen, dass das Volumenverhältnis von abgezweigtem Teilstrom und verbleibendem Reststrom des Ofenabgases 1:99 bis 40:60, vorzugsweise 10:90 bis 30:70 beträgt.

Die Erfindung ist besonders vorteilhaft für Kapazitätserhöhungen von bestehenden Ofenanlagen, bei stark zunehmendem Einsatz alternativer Brennstoffe und unter Umständen sogar für Neuinstallationen. Ein weiterer Vorteil ist die separate Ausschleusung von nutzbarer Wärme bei einem wesentlich höheren und damit wertvolleren Temperaturniveau von über 850°C statt der üblicherweise vom Wärmetauscherabgas verfügbaren 300 bis 350°C.

Im Falle einer Leistungssteigerung bestehender Ofenanlagen kann durch die Abzweigung eines Hochtemperaturteilgasstroms eine kostspielige Vergrößerung des vorhandenen Vorwärmers vermieden werden, was zudem auch den Betriebsunterbruch von mehreren Wochen auf einige Tage reduziert. Es müssen dann lediglich die Gasabzweigung sowie die damit verbundenen Installationen, wie z.B. Mischzyklone, Heißgasklappen und Gebläse, nachgerüstet werden.

Weiters ermöglicht es die Erfindung, das Problem des sogenannten AFR-Zuschlags in der Wärmetauscher-Dimensionierung und die damit verbundenen Mehrinvestition in den Griff zu bekommen. Der AFR-Aufschlag steht im Zusammenhang mit der Verwendung von alternativen Brennstoffen (Alternative Fuels and Raw Materials - AFR) und bedeutet, dass die Wärmetauscherstufen bei der Neuerrichtung von Vorwärmern größer dimensioniert werden müssen, wenn die Anlage auch unter Verwendung von alternativen Brennstoffen effizient betrieben werden soll. Durch die erfindungsgemäße Abzweigung eines Teilstroms der Ofenabgase kann dieser AFR-Zuschlag vermieden werden, da dadurch die durch den Vorwärmer gezogene Ofenabgasmenge konstant gehalten bzw. nicht erhöht wird.

Die Erfindung ist auch dann von Vorteil, wenn eine neu projektierte Ofenanlage häufig über längere Zeit bei sehr tiefer Teillast (<70%) betrieben werden muss, beispielsweise bei starken Schwankungen des Absatzes. In einem solchen Fall kann der normalerweise abgezweigte Teilstrom abgestellt und somit die die Wärmetauscherstufen durchströmende Ofenabgasmenge und damit die Gasgeschwindigkeiten in den oberen Wärmetauscherstufen auf normalem, betriebssicherem Niveau gehalten werden. Die Geschwindigkeiten im Kalzinator und in der untersten Wärmetauscherstufe werden dadurch allerdings nicht beeinflusst, was in der Auslegung entsprechend zu berücksichtigen wäre.

Gemäß einer bevorzugten Verfahrensweise wird die fühlbare Wärme des abgezweigten Teilstroms und ggf. des Reststroms verwertet.

Die Verwertung kann dabei auf verschiedenste Weise und entsprechend den jeweiligen Gegebenheiten erfolgen, wobei die thermische Energie des Ofenabgases entweder dem Klinkerherstellungsprozess oder einer externen Verwertung zugeführt werden kann. Bevorzugt ist vorgesehen, dass der abgezweigte Teilstrom des Ofengases und das aus dem in Strömungsrichtung des Ofenabgases gesehen letzten Zyklon-Schwebegaswärmetauscher abgezogene Ofenabgas miteinander vermischt werden. Es wird somit ein Hochtemperaturteilstrom mit einem Tieftemperaturgasstrom gemischt und bevorzugt für eine Rohmaterial- und/oder Brennstofftrocknung verwendet. Der getrocknete Brennstoff bzw. das getrocknete Rohmaterial wird bevorzugt dem Klinkerherstellungsprozess zugeführt. Wenn der abgezweigte Hochtemperaturteilstrom und Tieftemperäturgasstrom miteinander vermischt werden, bleibt die Betriebstemperatur des Zuggebläses in etwa auf dem üblichen Niveau und ein Hochtemperaturgebläse kann vermieden werden.

Weiters ist bevorzugt vorgesehen, dass der abgezweigte Teilstrom des Ofengases und das aus dem in Strömungsrichtung des Ofenabgases gesehen letzten Zyklon-Schwebegaswärmetauscher abgezogene Ofenabgas unmittelbar einer Mischeinrichtung zugeführt werden. Dies bedeutet, dass der abgezweigte Teilstrom direkt in die Mischeinrichtung überführt wird und keine zwischengeschaltenen Aggregate zur Verwertung der thermischen Energie vorgesehen sind.

Bevorzugt kann das Mischverhältnis des abgezweigten Teilstroms zu dem in Strömungsrichtung des Ofenabgases gesehen letzten Zyklon-Schwebegaswärmetauscher abgezogenen Ofenabgas so gewählt sein, dass das die Mischeinrichtung verlassende Heißgas eine Temperatur von 400°C bis 550°C aufweist.

Falls kein Bedarf für eine Materialtrocknung besteht, kann der abgezweigte Teilstrom des Ofenabgases dank des hohen Temperaturniveaus von bevorzugt > 850°C sehr effizient thermisch genutzt werden, beispielsweise in einem Abhitzekessel zur Dampferzeugung.

Zur Lösung der der Erfindung zugrundeliegenden Aufgabe ist gemäß einem zweiten Aspekt der Erfindung bei der Zementklinkerherstellungsanlage der eingangs genannten Art vorgesehen, dass eine Zweigleitung zum Abzweigen eines Teilstroms des Ofenabgases vom Strömungsweg angeordnet ist.

Eine bevorzugte Weiterbildung sieht vor, dass die Zweigleitung nach dem in Strömungsrichtung des Ofenabgases gesehen ersten Zyklon-Schwebegaswärmetauscher vom Strömungsweg abzweigt, wobei die Zweigleitung insbesondere zwischen dem in Strömungsrichtung des Ofenabgases gesehen ersten und zweiten Zyklon-Schwebegaswärmetauscher vom Strömungsweg abzweigt.

Eine weitere bevorzugte Weiterbildung sieht vor, dass ein Regelorgan, insbesondere ein Schieber zum Einstellen des Teilstroms des abgezweigten Ofenabgases vorgesehen ist. Das Regelorgan ist hierbei bevorzugt so eingestellt, dass das Volumenverhältnis von abgezweigtem Teilstrom und verbleibendem Reststrom des Ofenabgases 5:95 bis 40:60, vorzugsweise 10:90 bis 30:70 beträgt.

Eine weitere bevorzugte Weiterbildung sieht vor, dass die Zweigleitung und eine vom in Strömungsrichtung des Ofenabgases gesehen letzten Zyklon-Schwebegaswärmetauscher wegführende Abzugsleitung einer Mischeinrichtung zugeführt sind. Die Mischeinrichtung ist bevorzugt von einem Mischzyklon gebildet, dessen Feststoffaustrag für das ausgeschiedene Heißmehl mit dem Kalzinator oder einer Rohmehlaufgabe- oder -transporteinrichtung verbunden ist.

Eine weitere bevorzugte Weiterbildung sieht vor, dass das über die Zweigleitung abgezweigte Ofenabgas und ggf. das vom in Strömungsrichtung des Ofenabgases gesehen letzten Zyklon-Schwebegaswärmetauscher abgezogene Ofenabgas einer thermischen Verwertung zugeführt ist. Die Verwertung umfasst beispielsweise eine Rohmaterial- und/oder Brennstofftrocknung, wobei der getrocknete Brennstoff bzw. das getrocknete Rohmaterial bevorzugt dem Klinkerherstellungsprozess zugeführt ist. Die Verwertung kann aber auch eine Dampferzeugung in einem Abhitzekessel umfassen.

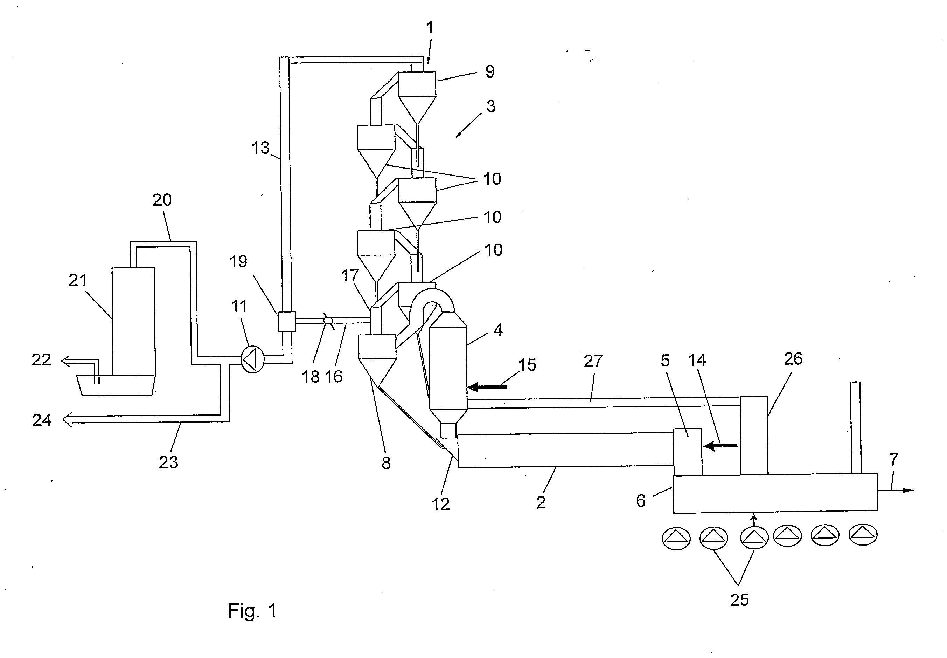

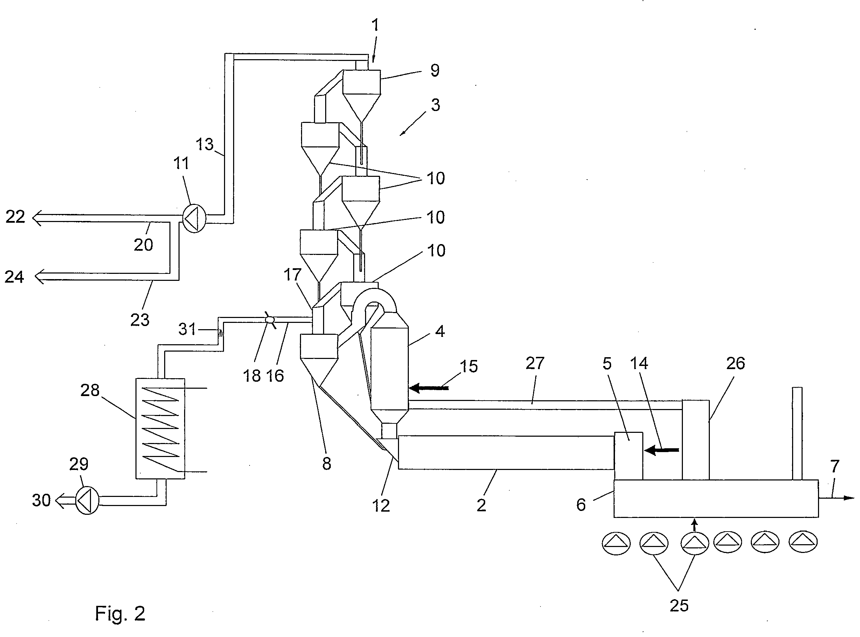

Die Erfindung wird nachfolgend an Hand von in der Zeichnung schematisch dargestellten Ausführungsbeispielen näher erläutert. In dieser zeigt Fig.1 ein erstes Ausführungsbeispiel einer Zementklinkerherstellungsanlage und Fig.2 ein zweites Ausführungsbeispiel einer Zementklinkerherstellungsanlage.

In Fig.1 ist eine Zementklinkerherstellungsanlage dargestellt, in welcher an einer schematisch mit 1 dargestellten Stelle aufgegebenes Rohmehl im Gegenstrom zu den heißen Abgasen eines Klinkerofens 2 in einem Vorwärmer 3 vorgewärmt und in einem Kalzinator 4 kalziniert wird. Der Klinker verlässt den Klinkerofen 2 an der mit 5 bezeichneten Stelle und wird in einem Klinkerkühler 6 gekühlt. Der gekühlte Klinker verlässt den Klinkerkühler 6 an der mit 7 bezeichneten Stelle.

Der Vorwärmer 3 kann einen oder mehrere Vorwärmerstränge aufweisen. In der Zeichnung ist ein Strang dargestellt. Der Strang weist eine Mehrzahl von hintereinander geschalteten Zyklon-Schwebegaswärmetauschern auf, wobei der erste Schwebegaswärmetauscher mit 8, der letzte Schwebegaswärmetauscher mit 9 und die dazwischen liegenden Schwebegaswärmetauscher mit 10 bezeichnet sind. Das Ofengebläse 11 erzeugt den erforderlichen Unterdruck, damit das auf der Heißmehlaufgabeseite 12 des Klinkerofens 2 austretende Ofenabgas durch den Kalzinator 4 und die hintereinander geschalteten Schwebegaswärmetauscher 8, 10 und 9 und den Heißgasabzug 13 gezogen wird.

Der Feuerung des Klinkerofens 2 wird, wie schematisch mit 14 dargestellt, Brennstoff zugeführt. Die Brennstoffaufgabe für die Feuerung des Kalzinators 4 ist schematisch mit 15 dargestellt.

Der Klinkerkühler 6 weist eine Mehrzahl von Gebläsen 25 auf, über welche Umgebungsluft eingeblasen wird. Die Luft durchläuft den Klinkerkühler 6 und verlässt den Klinkerkühler 6 über den Tertiärluftabzug 26 und den Tertiärluftkanal 27, wobei der Tertiärluftkanal im Kalzinator 4 mündet.

Zusätzlich zum Heißgasabzug 13 wird Ofenabgas auch über eine Zweigleitung 16 entnommen. Die Abzweigestelle befindet sich am Ausgang 17 des ersten Schwebegaswärmetauschers 8. In der Zweigleitung 16 ist ein Regelorgan in der Form eines Schiebers 18 angeordnet, mit dem die abgezogene Ofenabgasmenge eingestellt werden kann. Das über die Zweigleitung 16 abgezogene Ofenabgas wird einer Mischeinrichtung 19, z.B. einem Mischzyklon zugeführt, in dem die abgezweigte Teilmenge des Ofenabgases mit dem über den Heißgasabzug 13 abgezogenen, durch den gesamten Vorwärmer 3 gezogenen Reststrom des Ofenabgases vermischt wird. Im Kalzinator 4 wird das Rohmehl auf Temperaturen von 700 bis 900, insbesondere 850°C erhitzt und dementsprechend weist die über die Zweigleitung 16 abgezogene Teilmenge des Ofenabgases eine Temperatur von ca. 850°C auf. Die Restmenge des Ofenabgases weist nach dem Passieren des Vorwärmers 3 im Heißgasabzug 13 eine Temperatur von 250 bis 350°C, insbesondere 300°C auf. Das die Mischeinrichtung 19 verlassende Heißgas weist je nach dem Volumenverhältnis der Abgasströme eine Temperatur von 400 bis 550°C auf. Das Heißgas kann nun über eine Leitung 20 einer Entstaubungseinrichtung 21 und das entstaubte Heißgas einer Rohmehltrocknung 22 zugeführt werden. Alternativ oder zusätzlich kann das Heißgas über eine Leitung 23 einer Kohlenmühle 24 zur Trocknung der als Brennstoff für die Feuerung 14 vorgesehenen Kohle zugeführt werden.

Die Ausbildung gemäß Fig.2 entspricht der Ausbildung gemäß Fig.1, sodass für gleiche Teile die gleichen Bezugszeichen verwendet werden. Abweichend von Fig.1 wird nun der über die Zweigleitung 15 abgezweigte Teilstrom des Ofenabgases und der über den Heißgasabzug 13 abgezogene Reststrom nicht miteinander vermischt, sondern gesondert voneinander einer thermischen Verwertung zugeführt. Das über den Heißgasabzug 13 abgezogene Heißgas wird über die Leitung 20 einer Rohmehltrocknung 22 zugeführt. Alternativ oder zusätzlich kann das Heißgas über eine Leitung 23 einer Kohlenmühle 24 zur Trocknung der als Brennstoff für die Feuerung 14 vorgesehenen Kohle zugeführt werden. Das über die Zweigleitung 16 abgezweigte Heißgas kann auf Grund der wesentlich höheren Temperatur von 800 - 900°C nach einer Grobentstaubung 31 einem Abhitzekessel 28 zur Dampferzeugung zugeführt werden. Das den Abhitzekessel 28 verlassende gekühlte Heißgas wird dann über ein Gebläse 29 einer weiteren Entstaubung 30 zugeführt.

## Patentansprüche

1. Verfahren zur Zementklinkerherstellung, bei welchem Rohmehl mit den heißen Abgasen eines Klinkerofens in einem Vorwärmer vorgewärmt und das vorgewärmte und ggf. in einem Kalzinator kalzinierte Rohmehl im Klinkerofen zu Klinker gebrannt wird, wobei der Vorwärmer wenigstens einen Strang aus einer Mehrzahl von hintereinander von dem Ofenabgas durchströmten Zyklon-Schwebegaswärmetauschern umfasst, in denen das Rohmehl stufenweise vorgewärmt wird, wobei ein Teilstrom des Ofenabgases abgezweigt wird, sodass lediglich ein verbleibender Reststrom des Ofenabgases zum Vorwärmen des Rohmehls genutzt wird, **dadurch gekennzeichnet, dass** der abgezweigte Teilstrom des Ofengases und das aus dem in Strömungsrichtung des Ofenabgases gesehen letzten Zyklon-Schwebegaswärmetauscher (9) abgezogene Ofenabgas miteinander vermischt werden.

2. Verfahren nach Anspruch 1, **dadurch gekennzeichnet, dass** der Teilstrom des Ofenabgases nach dem in Strömungsrichtung des Ofenabgases gesehen ersten Zyklon-Schwebegaswärmetauscher (8) abgezweigt wird.

3. Verfahren nach Anspruch 2, **dadurch gekennzeichnet, dass** der Teilstrom des Ofenabgases zwischen dem in Strömungsrichtung des Ofenabgases gesehen ersten (8) und zweiten Zyklon-Schwebegaswärmetauscher (10) abgezweigt wird.

4. Verfahren nach Anspruch 1, 2 oder 3, **dadurch gekennzeichnet, dass** das Volumenverhältnis von abgezweigtem Teilstrom und verbleibendem Reststrom des Ofenabgases 1:99 bis 40:60, vorzugsweise 10:90 bis 30:70 beträgt.

5. Verfahren nach einem der Ansprüche 1 bis 4, **dadurch gekennzeichnet, dass** der abgezweigte Teilstrom des Ofengases und das aus dem in Strömungsrichtung des Ofenabgases gesehen letzten Zyklon-Schwebegaswärmetauscher abgezogene Ofenabgas unmittelbar einer Mischeinrichtung (19) zugeführt werden.

6. Verfahren nach Anspruch 5, **dadurch gekennzeichnet, dass** das Mischverhältnis des abgezweigten Teilstroms zu dem in Strömungsrichtung des Ofenabgases gesehen letzten Zyklon-Schwebegaswärmetauscher abgezogenen Ofenabgas so gewählt ist, dass das die Mischeinrichtung (19) verlassende Heißgas eine Temperatur von 400°C bis 550°C aufweist.

7. Verfahren nach einem der Ansprüche 1 bis 6, **dadurch gekennzeichnet, dass** die fühlbare Wärme des abgezweigten Teilstroms und ggf. des Reststroms verwertet wird.

8. Verfahren nach Anspruch 7, **dadurch gekennzeichnet, dass** die Verwertung eine Rohmaterial- und/oder Brennstofftrocknung (22) umfasst, wobei der getrocknete Brennstoff bzw. das getrocknete Rohmaterial bevorzugt dem Klinkerherstellungsprozess zugeführt wird.

9. Verfahren nach Anspruch 7, **dadurch gekennzeichnet, dass** die Verwertung eine Dampferzeugung in einem Abhitzekessel (28) umfasst.

10. Verfahren nach Anspruch 7, 8 oder 9, **dadurch gekennzeichnet, dass** die Verwertung die Verwendung in einem Trocknungsaggregat zur Trocknung von nassen, organische Komponenten enthaltenden Abfallstoffen, dessen Trocknerabgase dem Kalzinator (4) zugeführt werden, ausschließt.

11. Zementklinkerherstellungsanlage, insbesondere zur Durchführung des Verfahrens nach einem der Ansprüche 1 bis 10, umfassend einen Klinkerofen (2), an dessen ausgabeseitigem Ende ein Klinkerkühler (6) angeschlossen ist und an dessen aufgabeseitigem Ende ein Vorwärmer (3) und ggf. ein Kalzinator (4) angeschlossen sind, wobei der Vorwärmer (3) wenigstens einen Strang aus einer Mehrzahl von hintereinander von dem Ofenabgas entlang eines Strömungsweges durchströmbaren Zyklon-Schwebegaswärmetauschern (8,9,10) umfasst, in denen das Rohmehl stufenweise vorgewärmt wird und eine Zweigleitung (16) zum Abzweigen eines Teilstroms des Ofenabgases vom Strömungsweg angeordnet ist, **dadurch gekennzeichnet, dass** die Zweigleitung (16) und eine vom in Strömungsrichtung des Ofenabgases gesehen letzten Zyklon-Schwebegaswärmetauscher (9) wegführende Abzugsleitung einer Mischeinrichtung (19) zugeführt sind.

12. Anlage nach Anspruch 11, **dadurch gekennzeichnet, dass** die Zweigleitung (16) nach dem in Strömungsrichtung des Ofenabgases gesehen ersten Zyklon-Schwebegaswärmetauscher (8) vom Strömungsweg abzweigt.

13. Anlage nach Anspruch 12, **dadurch gekennzeichnet, dass** die Zweigleitung (16) zwischen dem in Strömungsrichtung des Ofenabgases gesehen ersten (8) und zweiten (10) Zyklon-Schwebegaswärmetauscher vom Strömungsweg abgezweigt.

14. Anlage nach Anspruch 11, 12 oder 13, **dadurch gekennzeichnet, dass** ein Regelorgan (18), insbesondere ein Schieber zum Einstellen des Teilstroms des abgezweigten Ofenabgases vorgesehen ist.

15. Anlage nach Anspruch 14, **dadurch gekennzeichnet, dass** das Regelorgan (18) so eingestellt ist, dass das Volumenverhältnis von abgezweigtem Teilstrom und verbleibendem Reststrom des Ofenabgases 5:95 bis 40:60, vorzugsweise 10:90 bis 30:70 beträgt.

16. Anlage nach einem der Ansprüche 11 bis 15, **dadurch gekennzeichnet, dass** die Mischeinrichtung (19) von einem Mischzyklon gebildet wird, dessen Feststoffaustrag für das ausgeschiedene Heißmehl mit dem Kalzinator (4) oder einer Rohmehlaufgabe- oder -transporteinrichtung verbunden ist.

17. Anlage nach einem der Ansprüche 11 bis 16, **dadurch gekennzeichnet, dass** das über die Zweigleitung (16) abgezweigte Ofenabgas und ggf. das vom in Strömungsrichtung des Ofenabgases gesehen letzten Zyklon-Schwebegaswärmetauscher (9) abgezogene Ofenabgas einer thermischen Verwertung zugeführt ist.

18. Anlage nach Anspruch 17, **dadurch gekennzeichnet, dass** die Verwertung eine Rohmaterial- und/oder Brennstofftrocknung (22,24) umfasst, wobei der getrocknete Brennstoff bzw. das getrocknete Rohmaterial bevorzugt dem Klinkerherstellungsprozess zugeführt ist.

19. Anlage nach Anspruch 17, **dadurch gekennzeichnet, dass** die Verwertung eine Dampferzeugung in einem Abhitzekessel (28) umfasst.

20. Anlage nach Anspruch 17, 18 oder 19, **dadurch gekennzeichnet, dass** die Verwertung ein Trocknungsaggregat zur Trocknung von nassen, organische Komponenten enthaltenden Abfallstoffen, dessen Trocknerabgase dem Kalzinator zugeführt sind, ausschließt.

## Claims

1. A process for the production of cement clinker, in which raw meal is preheated in a preheater using the hot exhaust gases from a clinker kiln, and the preheated raw meal, which is optionally calcined in a calciner, is burned to clinker in the clinker kiln, wherein the preheater comprises at least one string of a plurality of cyclone suspension-type heat exchangers, through which the kiln exhaust gas successively flows and in which the raw meal is preheated in stages, wherein a partial stream of the kiln exhaust gas is diverted such that only a remaining residual stream of the kiln exhaust gas is utilized for preheating the raw meal, **characterized in that** the diverted partial stream of the kiln exhaust gas and the kiln exhaust gas drawn off the last cyclone suspension-type heat exchanger (9), viewed in the flow direction of the kiln exhaust gas, are mixed with each other.

2. A process according to claim 1, **characterized in that** the partial stream of the kiln exhaust gas is diverted after the first cyclone suspension-type heat exchanger (8), viewed in the flow direction of the kiln exhaust gas.

3. A process according to claim 2, **characterized in that** the partial stream of the kiln exhaust gas is diverted between the first (8) and the second (10) cyclone suspension-type heat exchangers, viewed in the flow direction of the kiln exhaust gas.

4. A process according to claim 1, 2 or 3, **characterized in that** the volume ratio of the diverted partial stream and the remaining residual stream of the kiln exhaust gas is 1:99 to 40:60, preferably 10:90 to 30:70.

5. A process according to any one of claims 1 to 4, **characterized in that** the diverted partial stream of the kiln gas and the kiln exhaust gas drawn off the last cyclone suspension-type heat exchanger, viewed in the flow direction of the kiln exhaust gas, are directly fed to a mixing device (19).

6. A process according to claim 5, **characterized in that** the mixing ratio of the diverted partial stream to the kiln exhaust gas drawn off the last cyclone suspension-type heat exchanger, viewed in the flow direction of the kiln exhaust gas, is selected such that the hot gas leaving the mixing device (19) has a temperature of 400°C to 550°C.

7. A process according to any one of claims 1 to 6, **characterized in that** the sensible heat of the diverted partial stream, and optionally of the residual stream, is utilized.

8. A process according to claim 7, **characterized in that** the utilization comprises raw material and/or fuel drying (22), wherein the dried fuel and/or the dried raw material are preferably fed to the clinker production process.

9. A process according to claim 7, **characterized in that** the utilization comprises the generation of steam in a heat recovery boiler (28).

10. A process according to claim 7, 8 or 9, **characterized in that** the utilization excludes the use in a drying unit for drying wet waste substances containing organic components, whose drier exhaust gases are fed the calciner (4).

11. A cement clinker production plant, in particular for carrying out the process according to any one of claims 1 to 10, comprising a clinker kiln (2) to whose output-side end a clinker cooler (6) is connected and to whose feed-side end a preheater (3), and optionally a calciner (4), are connected, wherein the preheater (3) comprises at least one string of a plurality of cyclone suspension-type heat exchangers (8,9,10), through which the kiln exhaust gas is able to successively flow along a flow path and in which the raw meal is preheated in stages, and a branch duct (16) for diverting a partial stream of the kiln exhaust gas from the flow path is provided, **characterized in that** the branch duct (16) and a flue duct leading away from the last cyclone suspension-type heat exchanger (9), viewed in the flow direction of the kiln exhaust gas, are guided to a mixing device (19).

12. A plant according to claim 11, **characterized in that** the branch duct (16) branches off the flow path after the first cyclone suspension-type heat exchanger (8), viewed in the flow direction of the kiln exhaust gas.

13. A plant according to claim 12, **characterized in that** the branch duct (16) branches off the flow path between the first (8) and the second (10) cyclone suspension-type heat exchanger, viewed in the flow direction of the kiln exhaust gas.

14. A plant according to claim 11, 12 or 13, **characterized in that** a control organ (18), in particular a sliding valve for adjusting the partial stream of the diverted kiln exhaust gas, is provided.

15. A plant according to claim 14, **characterized in that** said control organ (18) is adjusted such that the volume ratio of the diverted partial stream and the remaining residual stream of the kiln exhaust gas amounts to 5:95 to 40:60, preferably 10:90 to 30:70.

16. A plant according to any one of claims 11 to 15, **characterized in that** the mixing device is comprised of a mixing cyclone whose solids discharge for the separated hot meal is connected to the calciner (4) or a raw meal charging or conveying device.

17. A plant according to any one of claims 11 to 16, **characterized in that** the kiln exhaust gas diverted via the branch duct (16), and optionally the kiln exhaust gas drawn off the last cyclone suspension-type heat exchanger (9), viewed in the flow direction of the kiln exhaust gas, are fed to a thermal utilization.

18. A plant according to claim 17, **characterized in that** said utilization comprises raw material and/or fuel drying (22, 24), wherein the dried fuel and/or dried raw material are preferably fed to the clinker production process.

19. A plant according to claim 17, **characterized in that** said utilization comprises the generation of steam in a heat recovery boiler (28).

20. A plant according to claim 17, 18 or 19, **characterized in that** said utilization excludes a drying unit for drying wet waste substances containing organic components, whose drier exhaust gases are fed the calciner.

## Revendications

1. Un procédé pour la production de ciment clinker, dans lequel de la farine crue de ciment est préchauffée dans un préchauffeur utilisant les gaz d'échappement chauds d'un four à clinker, et la farine crue de ciment préchauffée, qui est éventuellement calcinée dans un four de clacination, est brûlée pour être transformée en clinker dans le four à clinker, dans lequel le préchauffeur comprend au moins une chaîne d'une pluralité d'échangeurs de chaleur du type suspension à cyclone, par l'intermédiaire desquels le gaz d'échappement du four circule successivement et dans lesquels la farine crue de ciment est préchauffée en étages, dans lequel un courant partiel du gaz d'échappement du four est détourné de telle sorte que seul un courant résiduel restant du gaz d'échappement du four soit utilisé pour le préchauffage de la farine crue, **caractérisé en ce que** le courant partiel détourné du gaz d'échappement du four et du gaz d'échappement du four soutiré du dernier échangeur de chaleur du type suspension à cyclone (9), vus dans la direction d'écoulement du gaz d'échappement du four, sont mélangés entre eux.

2. Un procédé selon la revendication 1, **caractérisé en ce que** le courant partiel du gaz d'échappement du four est détourné après le premier échangeur de chaleur du type suspension à cyclone (8), vu dans la direction d'écoulement du gaz d'échappement du four.

3. Un procédé selon la revendication 2, **caractérisé en ce que** le courant partiel du gaz d'échappement du four est détourné entre les premier (8) et second (10) échangeurs de chaleur du type suspension à cyclone, vus dans la direction d'écoulement du gaz d'échappement du four.

4. Un procédé selon la revendication 1, 2 ou 3, **caractérisé en ce que** le rapport volumique du courant partiel détourné et le courant résiduel restant du gaz d'échappement du four est de 1:99 à 40:60, de préférence 10:90 à 30:70.

5. Un procédé selon l'une quelconque des revendications 1 à 4, **caractérisé en ce que** le courant partiel détourné du gaz de four et le gaz d'échappement du four soutiré de dernier échangeur de chaleur du type suspension à cyclone, vus dans la direction d'écoulement du gaz d'échappement du four, sont directement introduits dans un dispositif de mélange (19).

6. Un procédé selon la revendication 5, **caractérisé en ce que** le rapport de mélange du courant détourné vers le gaz d'échappement du four soutiré du dernier échangeur de chaleur du type suspension à cyclone, vu dans la direction d'écoulement du gaz d'échappement du four, est choisi de telle sorte que le gaz chaud quittant le dispositif de mélange (19) ait une température de 400°C à 550°C.

7. Un procédé selon l'une quelconque des revendications 1 à 6, **caractérisé en ce que** la chaleur sensible du courant partiel détourné, et éventuellement du courant résiduel, est utilisée.

8. Un procédé selon la revendication 7, **caractérisé en ce que** l'utilisation comprend le séchage de la matière première et/ou du combustible (22), dans lequel le combustible sec et/ou la matière première séchée sont de préférence introduits dans le procédé de production de clinker.

9. Un procédé selon la revendication 7, **caractérisé en ce que** l'utilisation comprend la génération de vapeur dans une chaudière de récupération de chaleur (28).

10. Un procédé selon la revendication 7, 8 ou 9, **caractérisé en ce que** l'utilisation exclut l'emploi dans une unité de séchage pour sécher des substances de déchets humides contenant des composants organiques, dont les gaz d'échappement plus secs sont introduits dans le four de calcination (4).

11. Une installation de production de ciment clinker, notamment pour la mise en oeuvre du procédé selon l'une quelconque des revendications 1 à 10, comprenant un four à clinker (2) à l'extrémité du côté sortie duquel est raccordé un refroidisseur de clinker (6) et à l'extrémité du côté alimentation duquel sont raccordés un préchauffeur (3), et éventuellement un four de clacination (4), dans laquelle le préchauffeur (3) comprend au moins une chaîne d'une pluralité d'échangeurs de chaleur du type suspension à cyclone (8, 9, 10), par l'intermédiaire desquels le gaz d'échappement du four peut circuler successivement le long d'une voie d'écoulement et dans lesquels la farine crue de ciment est préchauffée en étages et une conduite de dérivation (16) pour détourner un courant partiel du gaz d'échappement du four à partir de la voie d'écoulement soit prévue, **caractérisée en ce que** la conduite de dérivation (16) et un conduit de fumée partant du dernier échangeur de chaleur du type suspension à chaleur (9), vus dans la direction d'écoulement du gaz d'échappement du four, sont guidés vers un dispositif de mélange (19).

12. Une installation selon la revendication 11, **caractérisée en ce que** la conduite de dérivation (16) s'embranche sur la voie d'écoulement après le premier échangeur de chaleur du type suspension à cyclone (8), vu dans la direction d'écoulement du gaz d'échappement du four.

13. Une installation selon la revendication 12, **caractérisée en ce que** la conduite de dérivation (16) s'embranche sur la voie d'écoulement entre le premier (8) et le deuxième (10) échangeurs de chaleur du type suspension à cyclone, vus dans la direction d'écoulement du gaz d'échappement du four.

14. Une installation selon la revendication 11, 12 ou 13, **caractérisée en ce qu'**un organe de commande (18), en particulier une soupape de réglage du courant partiel du gaz d'échappement détourné du four, est prévu.

15. Une installation selon la revendication 14, **caractérisée en ce que** le dit organe de commande (18) est ajusté de telle sorte que le rapport volumique du courant partiel détourné et le courant résiduel restant des quantités de gaz d'échappement du four représente 5:95 à 40:60, de préférence 10:90 à 30:70.

16. Une installation selon l'une quelconque des revendications 11 à 15, **caractérisée en ce que** le dispositif de mélange (19) est constitué d'un cyclone à mélanger dont la décharge de matières solides pour la farine chaude séparée est reliée au four de calcination (4) ou à un dispositif de chargement ou de convoyage de farine crue de ciment.

17. Une installation selon l'une quelconque des revendications 11 à 16, **caractérisée en ce que** le gaz d'échappement du four détourné par la conduite de dérivation (16), et éventuellement le gaz d'échappement du four soutiré du dernier échangeur de chaleur du type suspension à cyclone (9), vus dans la direction d'écoulement du gaz d'échappement du four, sont envoyés à une utilisation thermique.

18. Une installation selon la revendication 17, **caractérisée en ce que** la dite utilisation comprend le séchage de la matière première et/ou du combustible (22, 24), dans laquelle le combustible sec et/ou la matière première séchée sont de préférence envoyés au procédé de production de clinker.

19. Une installation selon la revendication 17, **caractérisée en ce que** la dite utilisation comprend la génération de vapeur dans une chaudière de récupération de chaleur (28).

20. Une installation selon la revendication 17, 18 ou 19, **caractérisée en ce que** la dite utilisation exclut une unité de séchage pour sécher des substances de déchets humides contenant des composants organiques, dont les gaz d'échappement plus secs sont introduits dans le four de calcination.
